# EUROPEAN PATENT APPLICATION

(11) **EP 4 818 294 A1**
(43) Date of publication of application: **07.10.2026**
(21) Application number: 25760994.1
(22) Date of filing: 25.02.2025
(51) Int. Cl.: C10M 107/34, C09K 5/04, C10M 105/18, C10N 30/00, C10N 40/30

(54) **REFRIGERATOR, WORKING FLUID COMPOSITION, AND REFRIGERATOR OIL**

(30) Priority: 29.02.2024 JP 2024030209
(71) Applicant: ENEOS CORPORATION, Chiyoda-ku Tokyo 100-8162 (JP)
(72) Inventor: SEKI, Yuma, Tokyo 100-8162 (JP); KIMURA, Takefumi, Tokyo 100-8162 (JP); OGATA, Hidetoshi, Tokyo 100-8162 (JP); KAWAGUCHI, Masaki, Tokyo 100-8162 (JP)
(74) Representative: Grünecker Patent- und Rechtsanwälte PartG mbB
(86) International application number: PCT/JP2025/006381
(87) International publication number: WO 2025/182913

(57) **Abstract**

A refrigerating machine comprising a refrigerant circulation system having a compressor, a condenser, an expansion mechanism, and an evaporator, wherein the refrigerant circulation system has a member containing at least one selected from the group consisting of ethylene propylene diene rubber and hydrogenated nitrile butadiene rubber, wherein the refrigerant circulation system is charged with a refrigerant containing a hydrocarbon and a refrigerating machine oil containing a compound represented by the following formula (1), and
[Chem. 1]

R¹-O-(R³O)ₘ-R² (1)

[wherein R¹ and R² are each independently a hydrogen atom or an alkyl group, R³ is an ethylene group or a propylene group, and m is an integer of 2 or more.]
wherein the molar ratio of the ethylene group/the propylene group in the compound represented by formula (1) is 25/75 or more.

## Description

### Technical Field

The present invention relates to a refrigerating machine, a working fluid composition, and a refrigerating machine oil.

### Background Art

Refrigerating machines such as refrigerators and air conditioners include rubber members. For example, hydrogenated nitrile rubber and ethylene propylene diene rubber are known as rubbers used for seal members for refrigerating machines (see, for example, Patent Literature 1). Patent Literature 1 describes that hydrogenated nitrile rubber has problems in terms of blister resistance and permeability with respect to refrigerants, while ethylene propylene diene rubber is relatively good in terms of the blister resistance and permeability, but has problems in terms of resistance to refrigerating machine oils.

### Citation List

### Patent Literature

[Patent Literature 1] Japanese Unexamined Patent Publication No. 2011-79974

### Summary of Invention

### Technical Problem

According to studies by the present inventors, in a refrigerating machine having a member containing hydrogenated nitrile rubber or ethylene propylene diene rubber, when a refrigerant containing a hydrocarbon and a refrigerating machine oil containing a polyalkylene glycol-based compound are used, the weight of the member may change significantly with use.

Accordingly, one aspect of the present invention aims to suppress a change in weight of a member in a refrigerating machine having a member containing hydrogenated nitrile rubber or ethylene propylene diene rubber, when a refrigerant containing a hydrocarbon and a refrigerating machine oil containing a polyalkylene glycol-based compound are used.

### Solution to Problem

The present inventors have found that by appropriately adjusting the ratio of ethylene groups to propylene groups in a polyalkylene glycol-based compound, even when a refrigerating machine oil containing the polyalkylene glycol-based compound is used together with a refrigerant containing a hydrocarbon in a refrigerating machine having a member containing hydrogenated nitrile rubber or ethylene propylene diene rubber, the change in weight of the member can be suppressed.
[1] A refrigerating machine comprising a refrigerant circulation system having a compressor, a condenser, an expansion mechanism, and an evaporator, wherein the refrigerant circulation system has a member containing at least one selected from the group consisting of ethylene propylene diene rubber and hydrogenated nitrile butadiene rubber, and wherein the refrigerant circulation system is charged with a refrigerant containing a hydrocarbon and a refrigerating machine oil containing a compound represented by the following formula (1), and
   [Chem. 1]

   R¹-O-(R³O)ₘ-R² (1)

   [wherein R¹ and R² are each independently a hydrogen atom or an alkyl group, R³ is an ethylene group or a propylene group, and m is an integer of 2 or more.]
   wherein the molar ratio of the ethylene group/the propylene group in the compound represented by formula (1) is 25/75 or more.
[2] The refrigerating machine according to [1], wherein the molar ratio of the ethylene group/the propylene group in the compound represented by formula (1) is 65/35 or more.
[3] The refrigerating machine according to [2], wherein R¹ and R² in formula (1) are hydrogen atoms.
[4] The refrigerating machine according to [1], wherein the refrigerant circulation system has a member containing ethylene propylene diene rubber, and the molar ratio of the ethylene group/the propylene group in the compound represented by formula (1) is 50/50 or more.
[5] The refrigerating machine according to [1], wherein the refrigerant circulation system has a member containing hydrogenated nitrile butadiene rubber, and the molar ratio of the ethylene group/the propylene group in the compound represented by formula (1) is 75/25 or less.
[6] A working fluid composition containing a refrigerant and a refrigerating machine oil, wherein the refrigerant contains a hydrocarbon, wherein the refrigerating machine oil contains a compound represented by the following formula (1),
   [Chem. 2]

   R¹-O-(R³O)ₘ-R² (1)

   [wherein R¹ and R² are each independently a hydrogen atom or an alkyl group, R³ is an ethylene group or a propylene group, and m is an integer of 2 or more.]
   wherein the molar ratio of the ethylene group/the propylene group in the compound represented by formula (1) is 25/75 or more, wherein the working fluid composition is used in a refrigerating machine comprising a refrigerant circulation system having a compressor, a condenser, an expansion mechanism, and an evaporator, and wherein the refrigerant circulation system has a member containing at least one selected from the group consisting of ethylene propylene diene rubber and hydrogenated nitrile butadiene rubber.
[7] A refrigerating machine oil containing a compound represented by the following formula (1),
   [Chem. 3]

   R¹-O-(R³O)ₘ-R² (1)

   [wherein R¹ and R² are each independently a hydrogen atom or an alkyl group, R³ is an ethylene group or a propylene group, and m is an integer of 2 or more.]
   wherein the molar ratio of the ethylene group/the propylene group in the compound represented by formula (1) is 25/75 or more, wherein the refrigerating machine oil is used together with a refrigerant containing a hydrocarbon in a refrigerating machine comprising a refrigerant circulation system having a compressor, a condenser, an expansion mechanism, and an evaporator, and wherein the refrigerant circulation system has a member containing at least one selected from the group consisting of ethylene propylene diene rubber and hydrogenated nitrile butadiene rubber.

### Advantageous Effects of Invention

According to one aspect of the present invention, in a refrigerating machine having a member containing hydrogenated nitrile rubber or ethylene propylene diene rubber, when a refrigerant containing a hydrocarbon and a refrigerating machine oil containing a polyalkylene glycol-based compound are used, the change in weight of the member can be suppressed.

According to another aspect of the present invention, in a refrigerating machine having a member containing hydrogenated nitrile rubber or ethylene propylene diene rubber, when a refrigerant containing a hydrocarbon and a refrigerating machine oil containing a polyalkylene glycol-based compound are used, another object may be to suppress the generation of contaminants accompanying use, and in this case, the generation of the contaminants can also be suppressed.

### Brief Description of Drawings

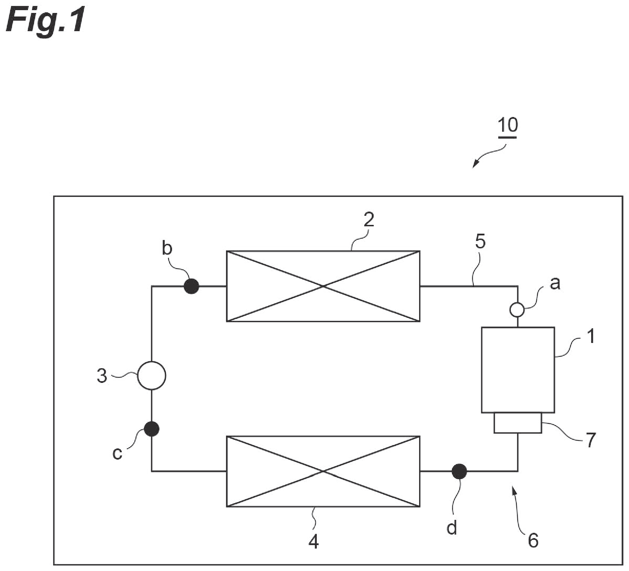

[FIG. 1] A schematic diagram illustrating one embodiment of a refrigerating machine.

### Description of Embodiments

Hereinafter, embodiments of the present invention will be described in detail with appropriate reference to the drawings.

FIG. 1 is a schematic diagram illustrating one embodiment of a refrigerating machine. As illustrated in FIG. 1, a refrigerating machine 10 at least includes a refrigerant circulation system 6 in which a compressor (refrigerant compressor) 1, a condenser (gas cooler) 2, an expansion mechanism 3 (capillary, expansion valve, etc.), and an evaporator (heat exchanger) 4 are sequentially connected by a flow path 5. In one embodiment, the refrigerant circulation system 6 further has an accumulator 7 between the evaporator 4 and the compressor 1 (on the side of the compressor 1) in order to suppress and prevent liquid refrigerant from flowing directly into the compressor 1.

The refrigerant circulation system 6 is charged with a refrigerant and a refrigerating machine oil. In the refrigerant circulation system 6, first, the high-temperature (normally 70 to 120 °C) refrigerant discharged from the compressor 1 into the flow path 5 becomes a high-density fluid (supercritical fluid, etc.) in the condenser 2. Subsequently, the refrigerant is liquefied by passing through a narrow flow path of the expansion mechanism 3, and is further vaporized in the evaporator 4 to reach a low temperature (normally -40 to 0 °C). Cooling by the refrigerating machine 10 utilizes the phenomenon in which the refrigerant absorbs heat from the surroundings when it vaporizes in the evaporator 4.

In the compressor 1, a small amount of refrigerant and a large amount of refrigerating machine oil coexist under high-temperature (normally 70 to 120 °C) conditions. The refrigerant discharged from the compressor 1 into the flow path 5 is in a gaseous state and contains a small amount (normally 1 to 10% by volume) of refrigerating machine oil as a mist, and a small amount of refrigerant is dissolved in this mist-like refrigerating machine oil (point a in FIG. 1).

In the condenser 2, the gaseous refrigerant is compressed to become a high-density fluid, and a large amount of refrigerant and a small amount of refrigerating machine oil coexist under relatively high-temperature (normally 40 to 80 °C) conditions (point b in FIG. 1). Furthermore, the mixture of a large amount of refrigerant and a small amount of refrigerating machine oil is sequentially sent to the expansion mechanism 3 and the evaporator 4, where it rapidly reaches a low temperature (normally -40 to 0 °C) (points c and d in FIG. 1), and is returned to the compressor 1 again.

Examples of such refrigerating machines 10 include refrigerating apparatuses and air conditioning apparatuses. Examples of refrigerating apparatuses include cooling apparatuses in refrigerators, refrigerated and frozen warehouses, vending machines, chemical plants, and the like. Examples of air conditioning apparatuses include automotive air conditioners, residential air conditioners, packaged air conditioners, dehumidifiers, and the like.

The refrigerant circulation system 6 has a member containing at least one selected from the group consisting of ethylene propylene diene rubber (EPDM) and hydrogenated nitrile butadiene rubber (H-NBR). Such a member may be, for example, an insulating member inside the compressor 1, or may be a seal member for preventing leakage of refrigerant and refrigerating machine oil in the compressor 1.

The refrigerant contains a hydrocarbon. The hydrocarbon is preferably a hydrocarbon having 1 to 5 carbon atoms, and more preferably a hydrocarbon having 2 to 4 carbon atoms. Examples of the hydrocarbon include methane, ethylene, ethane, propylene, propane (R290), cyclopropane, normal butane, isobutane (R600a), cyclobutane, methylcyclopropane, 2-methylbutane, and normal pentane. The refrigerant may contain only one of these hydrocarbons, or may contain two or more thereof. The refrigerant preferably contains a hydrocarbon that is a gas at 25 °C and 1 atm, and more preferably contains at least one selected from the group consisting of propane, normal butane, isobutane, and 2-methylbutane.

The refrigerant may consist solely of a hydrocarbon, or may contain a hydrocarbon and other refrigerants. Examples of other refrigerants include saturated fluorinated hydrocarbons, unsaturated fluorinated hydrocarbons, fluorine-containing ethers such as perfluoroethers, bis(trifluoromethyl) sulfide, trifluoroiodomethane, ammonia, and carbon dioxide.

The content of the hydrocarbon may be 50% by mass or more, 60% by mass or more, 70% by mass or more, 80% by mass or more, 90% by mass or more, or 95% by mass or more, based on the total amount of the refrigerant.

The refrigerating machine oil contains a compound represented by the following formula (1) (hereinafter also referred to as "PAG-based compound").
[Chem. 4]

R¹-O-(R³O)ₘ-R² (1)

In the formula, R¹ and R² are each independently a hydrogen atom or an alkyl group, R³ is an ethylene group or a propylene group, and m is an integer of 2 or more.

The alkyl group represented by R¹ and R² may be linear or branched. The number of carbon atoms of the alkyl group may be 1 or more, 2 or more, or 3 or more, and may be 16 or less, 12 or less, 8 or less, or 5 or less, and may be 4. The alkyl group may preferably be an n-butyl group.

The PAG-based compound may preferably be a compound in which both R¹ and R² are hydrogen atoms (a PAG-based compound having hydroxyl groups at both terminals), or a compound in which one of R¹ and R² is a hydrogen atom and the other is an alkyl group (a PAG-based compound having a hydroxyl group at one terminal), and may also be a mixture of a PAG-based compound having hydroxyl groups at both terminals and a PAG-based compound having a hydroxyl group at one terminal. In one embodiment, both R¹ and R² may be hydrogen atoms from the viewpoint of further suppressing the change in weight of the member and suppressing the generation of contaminants accompanying use of the refrigerating machine oil (in particular, remarkably suppressing the generation of contaminants when the refrigerating machine oil is used together with a member containing EPDM).

The proportion of terminal hydroxyl groups relative to all terminal groups of the PAG-based compound (the proportion of R¹ and R² being hydrogen atoms relative to all R¹ and R² of the PAG-based compound) may be 10 mol% or more, 20 mol% or more, 30 mol% or more, 40 mol% or more, 45 mol% or more, 50 mol% or more, 60 mol% or more, or 70 mol% or more, and may be 100 mol% or less, 90 mol% or less, 80 mol% or less, 70 mol% or less, 60 mol% or less, or 50 mol% or less.

The proportion of terminal hydroxyl groups relative to all terminal groups of the PAG-based compound is determined by ¹³C-NMR measurement. Specifically, the proportion can be appropriately determined by identifying, from the spectrum obtained by ¹³C-NMR measurement, peaks derived from carbons constituting hydrocarbon groups having terminal hydroxyl groups and peaks derived from carbons constituting terminal hydrocarbon groups (alkyl groups, etc.), and using the integrated values of the respective peaks.

It is preferable that both a structural unit in which R³ is an ethylene group and a structural unit in which R³ is a propylene group are contained in one molecule of the PAG-based compound. That is, the PAG-based compound preferably contains both ethylene oxide unit (EO unit) and propylene oxide unit (PO unit). In this case, the PAG-based compound may be a random copolymer or may be a block copolymer.

The molar ratio of the ethylene group/the propylene group (EO unit/PO unit) in the PAG-based compound (hereinafter also referred to as "EO/PO ratio") is 25/75 or more. This makes it possible to suppress the change in weight of the member in a refrigerating machine having a member containing EPDM or H-NBR, when a refrigerant containing a hydrocarbon and a refrigerating machine oil containing a polyalkylene glycol-based compound are used.

The EO/PO ratio may be 26/74 or more, 27/73 or more, 30/70 or more, 35/65 or more, 40/60 or more, 45/55 or more, 50/50 or more, 55/45 or more, or 60/40 or more, and may be 99/1 or less, 95/5 or less, 92/8 or less, 90/10 or less, 85/15 or less, 80/20 or less, 75/25 or less, 70/30 or less, 65/35 or less, 60/40 or less, 55/45 or less, 50/50 or less, 45/55 or less, 40/60 or less, or 38/62 or less.

When the refrigerant circulation system 6 has a member containing EPDM, by using a PAG-based compound having an EO/PO ratio of 25/75 or more, the generation of contaminants accompanying use of the refrigerating machine oil can also be remarkably suppressed. When the refrigerant circulation system 6 has a member containing EPDM, from the viewpoint of further suppressing the generation of contaminants accompanying use of the refrigerating machine oil, the EO/PO ratio may preferably be 27/73 or more, 30/70 or more, 35/65 or more, 40/60 or more, 45/55 or more, 50/50 or more, or 55/45 or more, and may more preferably be 60/40 or more, 65/35 or more, 70/30 or more, 75/25 or more, 80/20 or more, 85/15 or more, or 90/10 or more, and may be 99/1 or less, 95/5 or less, or 92/8 or less.

When the refrigerant circulation system 6 has a member containing H-NBR, from the viewpoint of further suppressing the generation of contaminants accompanying use of the refrigerating machine oil, the EO/PO ratio may preferably be 90/10 or less, 85/15 or less, 80/20 or less, 75/25 or less, 70/30 or less, 65/35 or less, or 60/40 or less, and may more preferably be 55/45 or less, 50/50 or less, 45/55 or less, 40/60 or less, 35/65 or less, or 30/70 or less, and may be 26/74 or more or 27/73 or more.

The EO/PO ratio in the PAG-based compound is determined by ¹³C-NMR measurement. Specifically, the EO/PO ratio can be appropriately determined by identifying, from the spectrum obtained by ¹³C-NMR measurement, peaks derived from carbons constituting EO units and peaks derived from carbons constituting PO units, respectively, and using information on EO units and PO units and the integrated values of respective peaks.

The value of m in formula (1) may be 2 or more, 5 or more, 10 or more, or 15 or more, and may be 40 or less, 35 or less, 30 or less, or 25 or less. The PAG-based compound may be a mixture of a plurality of types of PAG-based compounds having mutually different values of m. The average value of m may be 2 or more, 5 or more, 10 or more, or 15 or more, and may be 40 or less, 35 or less, 30 or less, or 25 or less. The number-average molecular weight (Mn) of the PAG-based compound may be 500 or more, 700 or more, or 900 or more, and may be 1800 or less, 1600 or less, or 1400 or less. In another embodiment, the number-average molecular weight (Mn) of the PAG-based compound may be 1250 or less, or less than 1250, may be 1100 or less, or less than 1100, may be 1050 or less, or less than 1050, and may be 1000 or less, or less than 1000.

The number-average molecular weight (Mn) in the present specification means Mn (in terms of polypropylene glycol (standard sample)) obtained by GPC analysis. Specifically, for example, chloroform is used as a solvent, a solution is prepared by diluting to a sample concentration of 2% by mass, and analysis is performed using a GPC apparatus (for example, Alliance 2695, manufactured by Waters Corporation). The flow rate of the solvent is set to 1 ml/min, a column with an analyzable molecular weight of 100 to 10000 is used, and analysis is carried out using a refractive index detector. Note that the relationship between column retention time and molecular weight is determined using polypropylene glycol standards with known molecular weights, a calibration curve is separately prepared, and the molecular weight is determined from the obtained retention time.

The content of the PAG-based compound may be 50% by mass or more, 60% by mass or more, 70% by mass or more, 80% by mass or more, or 90% by mass or more, based on the total amount of the refrigerating machine oil.

The refrigerating machine oil contains the PAG-based compound as a base oil, and may further contain other base oils. Examples of other base oils include mineral oils and synthetic oils. The mineral oil may be a paraffinic mineral oil, a naphthenic mineral oil, or the like. Examples of synthetic oils include synthetic hydrocarbon oils such as poly-α-olefins and alkylbenzenes, and oxygen-containing oils such as polyalkylene glycol-based compounds other than the above-mentioned PAG-based compound, esters, and polyvinyl ethers.

The refrigerating machine oil may further contain additives. Examples of additives include antioxidants, antiwear agents, acid scavengers, oxygen scavengers, extreme pressure agents, oiliness agents, antifoaming agents, metal deactivators, viscosity index improvers, pour point depressants, and detergent dispersants. The content of the additives may be 0.1% by mass or more or 1% by mass or more, and may be 10% by mass or less or 5% by mass or less, based on the total amount of the refrigerating machine oil.

The refrigerating machine oil preferably further contains an antioxidant. Examples of antioxidants include phenolic antioxidants. Examples of phenolic antioxidants include 2,6-di-tert.-butyl-p-cresol (DBPC), 2,6-di-tert.-butyl-phenol, and 4,4'-methylenebis(2,6-di-tert.-butyl-phenol). The content of the antioxidant may be 0.01% by mass or more or 0.1% by mass or more, and may be 5% by mass or less, 3% by mass or less, or 1% by mass or less, based on the total amount of the refrigerating machine oil.

The refrigerating machine oil preferably further contains a phosphorus-based antiwear agent. Examples of phosphorus-based antiwear agents include phosphate esters, thiophosphate esters, acidic phosphate esters, amine salts of acidic phosphate esters, chlorinated phosphate esters, and phosphite esters. Examples of phosphate esters include triaryl phosphates such as tricresyl phosphate (TCP), triphenyl phosphate (TPP), and alkylated triphenyl phosphates (for example, propylated triphenyl phosphate and butylated triphenyl phosphate), and trialkyl phosphates. Examples of thiophosphate esters include triphenyl phosphorothionate (TPPT). The content of the phosphorus-based antiwear agent may be, for example, 0.01% by mass or more or 0.1% by mass or more, and may be 5% by mass or less or 3% by mass or less, based on the total amount of the refrigerating machine oil.

The refrigerating machine oil preferably further contains an acid scavenger. Examples of acid scavengers include epoxy-based acid scavengers. Examples of epoxy-based acid scavengers include glycidyl ether-based acid scavengers having a hydrocarbon group of 6 to 18 carbon atoms such as 2-ethylhexyl glycidyl ether and 4-tert-butylphenyl glycidyl ether, glycidyl ester-based acid scavengers having a hydrocarbon group of 6 to 18 carbon atoms such as glycidyl neodecanoate, α-olefin oxide-based acid scavengers having 6 to 18 carbon atoms such as 1,2-epoxydodecane and 1,2-epoxytetradecane, and alicyclic epoxy-based acid scavengers. The content of the acid scavenger may be 0.01% by mass or more or 0.1% by mass or more, and may be 5% by mass or less, 3% by mass or less, or 1% by mass or less, based on the total amount of the refrigerating machine oil.

The kinematic viscosity of the refrigerating machine oil at 40 °C may be 20 mm²/s or more, 30 mm²/s or more, or 40 mm²/s or more, and may be 100 mm²/s or less, 80 mm²/s or less, or 60 mm²/s or less. The kinematic viscosity of the refrigerating machine oil at 100 °C may be 1 mm²/s or more, 3 mm²/s or more, or 5 mm²/s or more, and may be 30 mm²/s or less, 20 mm²/s or less, or 15 mm²/s or less. The viscosity index of the refrigerating machine oil may be 100 or more, 120 or more, or 140 or more, and may be 270 or less, 250 or less, or 230 or less. The kinematic viscosity and viscosity index in the present specification mean the kinematic viscosity and viscosity index measured in accordance with JIS K2283:2000.

As described above, since the refrigerant and the refrigerating machine oil coexist in the refrigerating machine 10 (refrigerant circulation system 6), another embodiment of the present invention is also a working fluid composition containing the above-mentioned refrigerant containing a hydrocarbon and the above-mentioned refrigerating machine oil containing the above-mentioned PAG-based compound, which is a working fluid composition used in the above-mentioned refrigerating machine. In another embodiment, the working fluid composition is also a working fluid composition applicable to a refrigerating machine comprising a refrigerant circulation system having both a member containing ethylene propylene diene rubber and a member containing hydrogenated nitrile butadiene rubber. In another embodiment, the working fluid composition is also a working fluid composition applicable to both a refrigerating machine comprising a refrigerant circulation system having a member containing ethylene propylene diene rubber and a refrigerating machine comprising a refrigerant circulation system having a member containing hydrogenated nitrile butadiene rubber.

Furthermore, another embodiment of the present invention is also a refrigerating machine oil containing the above-mentioned PAG-based compound, which is used together with the above-mentioned refrigerant containing a hydrocarbon in the above-mentioned refrigerating machine. In another embodiment, the refrigerating machine oil is also a refrigerating machine oil applicable to a refrigerating machine comprising a refrigerant circulation system having both a member containing ethylene propylene diene rubber and a member containing hydrogenated nitrile butadiene rubber. In another embodiment, the refrigerating machine oil is also a refrigerating machine oil applicable to both a refrigerating machine comprising a refrigerant circulation system having a member containing ethylene propylene diene rubber and a refrigerating machine comprising a refrigerant circulation system having a member containing hydrogenated nitrile butadiene rubber.

The content of the refrigerating machine oil may be 1 part by mass or more or 2 parts by mass or more, and may be 500 parts by mass or less or 400 parts by mass or less, relative to 100 parts by mass of the refrigerant.

### Examples

Hereinafter, the present invention will be described more specifically based on examples, but the present invention is not limited to the following examples.

Refrigerating machine oils of Examples and Comparative Examples were prepared using each of the following PAG-based compounds 1 to 6 as a base oil. Note that each refrigerating machine oil contains 0.5% by mass of a phenolic antioxidant (DBPC), 1.0% by mass of a phosphorus-based antiwear agent (TCP), and 0.5% by mass of an epoxy-based acid scavenger (2-ethylhexyl glycidyl ether). In addition, the kinematic viscosity of each refrigerating machine oil at 40 °C was approximately 44 to 56 mm²/s, the kinematic viscosity at 100 °C was approximately 9 to 11 mm²/s, and the viscosity index was approximately 156 to 213.
PAG-based compound 1: A compound represented by the above formula (1), wherein R¹ and R² are hydrogen atoms, R³ is an ethylene group or a propylene group (EO/PO ratio: 92/8), and the average value of m is approximately 18.4 (Mn: 849)
PAG-based compound 2: A compound represented by the above formula (1), wherein R¹ and R² are hydrogen atoms or n-butyl groups (proportion of terminal hydroxyl groups relative to all terminal groups: 65 mol%), R³ is an ethylene group or a propylene group (EO/PO ratio: 75/25), and the average value of m is approximately 20.8 (Mn: 1050)
PAG-based compound 3: A compound represented by the above formula (1), wherein R¹ and R² are hydrogen atoms or n-butyl groups (proportion of terminal hydroxyl groups relative to all terminal groups: 31 mol%), R³ is an ethylene group or a propylene group (EO/PO ratio: 60/40), and the average value of m is approximately 23.1 (Mn: 1240)
PAG-based compound 4: A compound represented by the above formula (1), wherein R¹ and R² are hydrogen atoms or n-butyl groups (proportion of terminal hydroxyl groups relative to all terminal groups: 45 mol%), R³ is an ethylene group or a propylene group (EO/PO ratio: 35/65), and the average value of m is approximately 18.2 (Mn: 1040)
PAG-based compound 5: A compound represented by the above formula (1), wherein R¹ and R² are hydrogen atoms or n-butyl groups (proportion of terminal hydroxyl groups relative to all terminal groups: 50 mol%), R³ is an ethylene group or a propylene group (EO/PO ratio: 27/73), and the average value of m is approximately 16.7 (Mn: 976)
PAG-based compound 6: A compound represented by the above formula (1) wherein R¹ and R² are hydrogen atoms or n-butyl groups (proportion of terminal hydroxyl groups relative to all terminal groups: 50 mol%), R³ is an ethylene group or a propylene group (EO/PO ratio: 93/7), and the average value of m is approximately 19.8 (Mn: 1200)

### (Evaluation of Weight Change Rate and Amount of Contaminants)

Into a 300 mL autoclave, a mixture of 100 g of each refrigerating machine oil with a water content adjusted to 1000 ppm and 30 g of propane (R290) as a refrigerant was placed. In the state where each of an EPDM member (dumbbell-shaped test piece, 2.5 cm in length, 10.0 cm in width, 0.2 cm in thickness), an H-NBR member (dumbbell-shaped test piece, 2.5 cm in length, 10.0 cm in width, 0.2 cm in thickness), and a PTFE member (dumbbell-shaped test piece, 2.5 cm in length, 10.0 cm in width, 0.015 cm in thickness), whose weights had been measured in advance, were immersed in the mixture, heating was carried out at 130 °C for 336 hours. After the completion of heating, the weights of the EPDM member, the H-NBR member, and the PTFE member were each measured. The weight change rate (%) defined by the following formula:
Weight change rate (%) = (weight of member after heating - weight of member before heating) / weight of member before heating × 100 was calculated using the weights of the measured members before and after heating.
In addition, after the completion of heating, with reference to JIS K2276:2003, each refrigerating machine oil was filtered through a cellulose filter with a pore size of 0.3 µm, the residue and the filter were sufficiently washed with hexane to remove hexane-soluble components, and the weight of the residue obtained by drying was measured. From the measured weight, the amount of contaminants (mg/100g) was calculated by converting to the amount per 100 g of refrigerating machine oil.

The evaluation results of the weight change rate and the amount of contaminants are shown in Table 1.

**[Table 1]**

| | | Example 1 | Example 2 | Example 3 | Example 4 | Example 5 | Comparative Example 1 |
|---|---|---|---|---|---|---|---|
| PAG-based compound | | 1 | 2 | 3 | 4 | 5 | 6 |
| EO/PO ratio | | 92/8 | 75/25 | 60/40 | 35/65 | 27/73 | 7/93 |
| Weight change rate (%) | EPDM | +2 | -5 | -8 | -9 | -10 | -12 |
| | H-NBR | -4 | -6 | -8 | -8 | -9 | -10 |
| | PTFE | -0.1 | 0.0 | 0.0 | 0.0 | 0.0 | -0.2 |
| Amount of contaminants (mg/100 g) | EPDM | 6.2 | 11.0 | 17.8 | 27.7 | 30.8 | 64.2 |
| | H-NBR | 3.6 | 1.0 | 0.2 | <0.1 | 0.0 | 1.6 |
| | PTFE | 6.1 | 2.0 | 0.0 | 0.6 | 0.9 | 4.2 |

As can be seen from Table 1, by using a refrigerating machine oil containing a PAG-based compound having an EO/PO ratio of 25/75 or more in the presence of a refrigerant containing a hydrocarbon, the change in weight of the member can be suppressed for both the member containing EPDM and the member containing H-NBR (the absolute value of the weight change rate can be reduced). On the other hand, when a member containing PTFE was used, the weight change rate was equivalent regardless of the EO/PO ratio of the PAG-based compound. That is, the effect of being able to suppress the above-mentioned weight change is a specific effect exhibited when a member containing EPDM or a member containing H-NBR is used.

In addition, a refrigerating machine oil containing a PAG-based compound having an EO/PO ratio of 25/75 or more, when used together with a member containing EPDM and a member containing H-NBR, respectively, in the presence of a refrigerant containing a hydrocarbon, can also suppress the generation of contaminants accompanying use. When the refrigerating machine oil was used together with a member containing H-NBR or a member containing PTFE, the amount of contaminants was similarly small in all of Examples 1 to 5 and Comparative Example 1, whereas when the refrigerating machine oil was used together with a member containing EPDM, the amount of contaminants was remarkably smaller in Examples 1 to 5 than in Comparative Example 1. The fact that such a difference in the tendency of the amount of contaminants arises depending on the type of member is surprising, and it is particularly surprising that Examples 1 to 5 can remarkably suppress the generation of contaminants compared to Comparative Example 1 when the refrigerating machine oil is used together with a member containing EPDM.

The effects shown above are also obtained when the content of the phenolic antioxidant (DBPC) is changed to 0.1 to 1% by mass, when the content of the phosphorus-based antiwear agent (TCP) is changed to 0.1 to 3% by mass, and when the content of the epoxy-based acid scavenger (2-ethylhexyl glycidyl ether) is changed to 0.1 to 3% by mass. In addition, the effects show a similar tendency when TCP is changed to triphenyl phosphate, propylated triphenyl phosphate, or butylated triphenyl phosphate, and when 2-ethylhexyl glycidyl ether is changed to 4-t-butylphenyl glycidyl ether, glycidyl neodecanoate, or 1,2-epoxytetradecane. In addition, the effects show a similar tendency when propane (R290) is changed to isobutane (R600a).

A refrigerating machine oil containing a PAG-based compound having an EO/PO ratio of 25/75 or more can be suitably used not only together with a member containing H-NBR, but also together with a member containing EPDM, and is therefore also useful as a refrigerating machine oil that can be used for both a member containing H-NBR and a member containing EPDM. For the same reason as above, it is also useful as a refrigerating machine oil that can be used for both a refrigerating machine comprising a member containing H-NBR and a refrigerating machine comprising a member containing EPDM.

### Reference Signs List

1: compressor, 2: condenser, 3: expansion mechanism, 4: evaporator, 5: flow path, 6: refrigerant circulation system, 7: accumulator, 10: refrigerating machine.

## Claims

1. A refrigerating machine comprising a refrigerant circulation system having a compressor, a condenser, an expansion mechanism, and an evaporator,
wherein the refrigerant circulation system has a member containing at least one selected from the group consisting of ethylene propylene diene rubber and hydrogenated nitrile butadiene rubber, and
wherein the refrigerant circulation system is charged with a refrigerant containing a hydrocarbon and a refrigerating machine oil containing a compound represented by the following formula (1), and
[Chem. 1]
R¹-O-(R³O)ₘ-R² (1)
[wherein R¹ and R² are each independently a hydrogen atom or an alkyl group, R³ is an ethylene group or a propylene group, and m is an integer of 2 or more.]
wherein the molar ratio of the ethylene group/the propylene group in the compound represented by the formula (1) is 25/75 or more.

2. The refrigerating machine according to claim 1, wherein the molar ratio of the ethylene group/the propylene group in the compound represented by the formula (1) is 65/35 or more.

3. The refrigerating machine according to claim 2, wherein R¹ and R² in the formula (1) are hydrogen atoms.

4. The refrigerating machine according to claim 1, wherein the refrigerant circulation system has a member containing the ethylene propylene diene rubber, and
the molar ratio of the ethylene group/the propylene group in the compound represented by the formula (1) is 50/50 or more.

5. The refrigerating machine according to claim 1, wherein the refrigerant circulation system has a member containing the hydrogenated nitrile butadiene rubber, and
the molar ratio of the ethylene group/the propylene group in the compound represented by the formula (1) is 75/25 or less.

6. A working fluid composition containing a refrigerant and a refrigerating machine oil,
wherein the refrigerant contains a hydrocarbon,
wherein the refrigerating machine oil contains a compound represented by the following formula (1),
[Chem. 2]
R¹-O-(R³O)ₘ-R² (1)
[wherein R¹ and R² are each independently a hydrogen atom or an alkyl group, R³ is an ethylene group or a propylene group, and m is an integer of 2 or more.]
wherein the molar ratio of the ethylene group/the propylene group in the compound represented by the formula (1) is 25/75 or more,
wherein the working fluid composition is used in a refrigerating machine comprising a refrigerant circulation system having a compressor, a condenser, an expansion mechanism, and an evaporator, and
wherein the refrigerant circulation system has a member containing at least one selected from the group consisting of ethylene propylene diene rubber and hydrogenated nitrile butadiene rubber.

7. A refrigerating machine oil containing a compound represented by the following formula (1),
[Chem. 3]
R¹-O-(R³O)ₘ-R² (1)
[wherein R¹ and R² are each independently a hydrogen atom or an alkyl group, R³ is an ethylene group or a propylene group, and m is an integer of 2 or more.]
wherein the molar ratio of the ethylene group/the propylene group in the compound represented by the formula (1) is 25/75 or more,
wherein the refrigerating machine oil is used together with a refrigerant containing a hydrocarbon in a refrigerating machine comprising a refrigerant circulation system having a compressor, a condenser, an expansion mechanism, and an evaporator, and
wherein the refrigerant circulation system has a member containing at least one selected from the group consisting of ethylene propylene diene rubber and hydrogenated nitrile butadiene rubber.
